# EUROPEAN PATENT APPLICATION

(11) **EP 3 719 597 A1**
(43) Date of publication of application: **07.10.2020**
(21) Application number: 19166520.7
(22) Date of filing: 01.04.2019
(51) Int. Cl.: G05B 19/05, G05B 23/02

(54) **COMPUTERIZED DEVICE AND METHOD FOR OPERATING AN INDUSTRIAL SYSTEM**

(71) Applicant: Siemens Aktiengesellschaft, 80333 München (DE)
(72) Inventor: Franze, Volker, 91207 Lauf an der Pegnitz (DE); Kaever, Michael, 91056 Erlangen (DE); Thon, Ingo, 85630 Grasbrunn (DE)

(57) **Abstract**

The computerized device (10) for operating an industrial system (1) including a plurality of sensors (2) for providing sensor values (V) and a storage (3) for storing the sensor values (V) provided by the sensors (2) comprises: a labeling unit (11) for providing a semantic label (L) to a certain sensor (2) of the plurality of sensors (2), said semantic label (L) being defined by a user (U) and specifying said certain sensor (2), a determining unit (12) for determining a unique identifier (I) for uniquely referencing those sensor values (V) stored in the storage (3) being provided by the certain sensor (2), and a generating unit (13) for generating a semantic element (E) for the certain sensor (2) for a semantic description (D) of the industrial system (1) by mapping the semantic label (L) and the determined unique identifier (I).

Moreover, a method and a computer program product for operating an industrial system as well as such an industrial system are proposed.

## Description

The present invention relates to a computerized device for operating an industrial system including a plurality of sensors for providing sensor values and a storage for storing the sensor values provided by the sensors and to such an industrial system. Moreover, the present invention relates to a method and to a computer program product for operating such an industrial system.

In an industrial system, like in an automation system, building machines may be largely simplified if a semantic description of the system components, like sensors, does exist. A semantic description includes for example which sensor tags of the sensors in the controller of the industrial system represents the value of the sensor. However, if a semantic description does not exist, the user, for example an engineer, needs to check the electric plan to identify the respective sensor, the digital port and based on that the sensor tag in the controller. In contrast, the semantic description may provide such a link directly.

In general, semantic models allow to abstract many programming tasks in such an industrial system. However, building semantic models of system components of an industrial system is a complicated process conventionally.

It is one objective of the present invention to enhance the operation of an industrial system.

According to a first aspect, a computerized device for operating an industrial system including a plurality of sensors for providing sensor values and a storage for storing the sensor values provided by the sensors is proposed. The computerized device comprises:
a) a labeling unit for providing a semantic label to a certain sensor of the plurality of sensors, said semantic label being defined by a user and specifying said certain sensor,
b) a determining unit for determining a unique identifier for uniquely referencing those sensor values stored in the storage being provided by the certain sensor, and
c) a generating unit for generating a semantic element for the certain sensor for a semantic description of the industrial system by mapping the semantic label and the determined unique identifier.

Further, the method may comprise a step d) of programming or controlling at least one system component of the industrial system using the provided semantic description. A system component may be a controller, an actuator, a sensor or a machine, like a CNC machine (CNC; computerized numeric control).

Therefore, the present computerized device has the beneficial technical effect of automatically generating semantic elements of certain sensors of the industrial system and, therefore, of automatically producing a semantic description of the industrial system without the need for a user or operator to study plans, like electric plans, of the industrial system.

This significantly reduces the engineering effort for the user. In addition, due to the present scheme, generating the semantic description does not require deep knowledge of certain engineering tools for the user.

For example, using the labeling unit, the user may input the semantic label for a certain sensor using natural language and/or human gestures. By using the labeling unit, the user has an interface which allows him to teach its system components, e.g. by touching a temperature sensor and saying a sentence like "This is the temperature sensor of the motor". Another example may include opening and closing a door multiple times and saying "This is the door". The present computerized device automatically infers the proper semantic element as a part of the semantic description by establishing the link, by the mapping, between the sematic label, e.g. the name provided by the user, and the unique identifier for the certain sensor, e.g. the sensor tag allocated to the certain sensor.

The following example may illustrate the functionality of the present computerized device for automatically identifying a connection between terms, e.g. sematic labels, e.g. given by means of talking, and measurements of the systems, i.e. those values stored in the storage being provided by said certain sensor. For generating at least a part of the semantic description, the following protocol may be implemented: First, the user provides a semantic label to the industrial system, e.g. by saying "This is the temperature sensor" into a microphone. Afterwards, the user may induce a change in the measurements of the sensor, e.g. for a temperature sensor by touching it. By inducing a change in the measurements of the sensor, the sensor tag in the system may be identified automatically. In addition, the user may use a camera and a pointing device, e.g. a finger, to show to the computerized device where the sensor is located in the industrial system.

According to an embodiment, the industrial system is an automation system. Moreover, the industrial system may be a control system for controlling a machine.

According to a further embodiment, the computerized device includes a memory for storing the generated semantic element as a part of the semantic description for describing the automation system.

According to a further embodiment, the memory is embodied by a data historian which includes a local database, an edge database and/or a cloud database.

According to a further embodiment, the computerized device includes a detection unit for detecting a trigger event provided by the user, wherein the detection unit is configured to trigger the labeling unit for providing the semantic label to the certain sensor using the detected trigger event.

The trigger event may be embodied by a certain keyword, e.g. by "Computer" or by a magic phrase "These measures ...".

According to a further embodiment, the labeling unit is configured to, after being triggered by the detection unit, trigger the determining unit for determining the unique identifier for the certain sensor.

Therefore, a temporal relation for the functionalities of the labeling unit and the determining unit is provided advantageously.

According to a further embodiment, each of the sensors is configured to provide a time series of measured sensor values, wherein the storage is configured to store the time series provided by the sensors.

According to a further embodiment, the determining unit includes an outlier detection unit and a code analyzer unit. In particular, the outlier detection unit is configured to detect atypical changes in the stored time series of the sensors and output sensor candidates for the certain sensor to the code analyzer unit in dependence on detected atypical changes. Moreover, the code analyzer unit may be configured to provide the unique identifier using the sensor candidates and using an automation code of the automation system.

In particular, the outlier detection unit is adapted to find changes in the measurements of the automation system that are atypical when compared to other measurements stored in the storage. Further, the code analyzer unit may be adapted to disambiguate cause and effect if multiple variables change, in particular using the automation code of the automation system. Furthermore, the code analyzer unit may use the input of a number of cameras providing a field of view with the user to learn visual representations of the certain sensor.

According to a further embodiment, the outlier detection unit is configured to utilize at least one of the following outlier detection algorithms including class support vector machines, probabilistic models, like Bayesian networks, and neural auto encoders, like deep neural auto encoders.

According to a further embodiment, if multiple sensor candidates for the certain sensor are output by the outlier detection unit, the code analyzer unit is configured to disambiguate cause and effect for providing the unique identifier for the certain sensor.

According to a further embodiment, the labeling unit includes at least one of the following:
- a keyboard for manually entering the semantic label for the certain sensor and/or for selecting the semantic label from a set of predefined semantic labels,
- a touch display for selecting the semantic label from a set of predefined semantic labels and/or for manually entering the semantic label for the certain sensor, and
- a microphone and a speech-to-text engine connected to the microphone for providing a natural language-based dialogue with the user regarding the certain sensor, and a chatbot for extracting the semantic label from the natural language-based dialogue for the certain sensor.

In particular, each of said input units, i.e. keyboard, touch display, chatbot, may be combined with each of said input methods, i.e. manually entering, selecting from a set of predefined semantic labels, using language-based dialogue. Moreover, also two or three input units may be combined, and, in an analogues way, also two or three input methods may be combined.

In particular, the chatbot is adapted to extract the semantic label as a named entity from the spoken text of the user. Here, a two stage approach may be used: Firstly, the spoken text may be transcribed in written text, e.g. by utilizing a deep neural network for text-to-speech conversion. Secondly, the named entity is extracted from the written text. The chatbot may provide the possibility to easily add additional information, for example, to specify the unit of measurement as "Temperature sensor, measured unit, °C" by saying "the temperature sensor measures in "°C". In addition, the chatbot may allow to query the user by saying "I feel that the temperature at the temperature sensor is increasing" which the user can confirm.

According to a further embodiment, the computerized device includes a localization device for determining a localization information indicating a localization of the certain sensor in the industrial system. Further, the generating unit may be configured to add the determined localization information to the semantic element for the certain sensor.

Any embodiment of the first aspect may be combined with any embodiment of the first aspect to obtain another embodiment of the first aspect.

The respective unit, e.g. the labeling unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

According to a second aspect, an industrial system is suggested. The industrial system comprises a plurality of sensors for providing sensor values, a storage for storing the sensor values provided by the sensors, and a computerized device for operating the industrial system according to the first aspect or according to an embodiment of the first aspect.

According to a third aspect, a method for operating an industrial system including a plurality of sensors for providing sensor values and a storage for storing the sensor values provided by the sensors is proposed. The method comprises:
a) providing a semantic label to a certain sensor of the plurality of sensors, said semantic label being defined by a user and specifying said certain sensor,
b) determining a unique identifier for uniquely referencing those sensor values stored in the storage being provided by the certain sensor, and
c) generating a semantic element by mapping the semantic label provided to the certain sensor and the determined unique identifier.

The embodiments and features described with reference to the computerized device of the present invention apply mutatis mutandis to the method of the present invention.

According to a fourth aspect, it is proposed a computer program product comprising a program code for executing the above-described method of the third aspect for operating an industrial system, when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic diagram of a first embodiment of an industrial system including a computerized device for operating the industrial system;
- Fig. 2: shows a schematic diagram of a second embodiment of an industrial system including a computerized device for operating the industrial system;
- Fig. 3: shows a schematic diagram of a third embodiment of an industrial system including a computerized device for operating the industrial system; and
- Fig. 4: shows a flow chart of an embodiment of a method for operating an industrial system.

In the Figures, like reference numerals designate like or functionally equivalent elements, unless otherwise indicated.

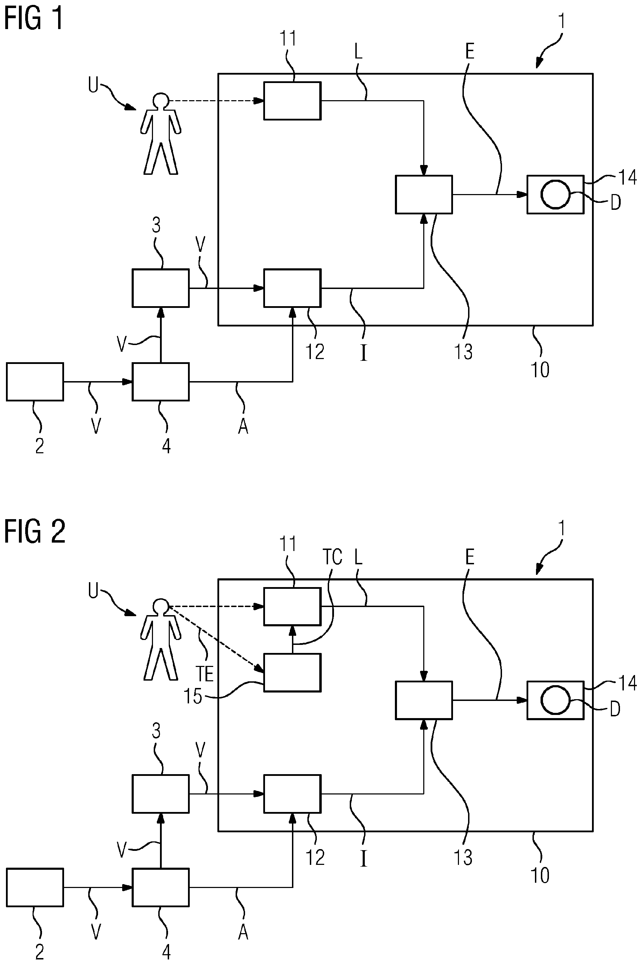

Fig. 1 shows a schematic diagram of a first embodiment of an industrial system 1 including a computerized device 10 for operating the industrial system 1.

The industrial system 1 is an automation system, for example. The industrial system 1 includes a plurality of sensors 2 for providing sensor values V and a storage 3 for storing the sensor values V provided by the sensors 2. Without loss of generality, Fig. 1 shows one sensor 2 which may be embodied as temperature sensor. Further, the industrial system 1 may include further system components. For example, such a system component may be a controller 4 as depicted in Fig. 1. The controller 4 may be embodied as a PLC (programable logic controller). Furthermore, system components may include actuators or machines, like CNC-machines (CNC; computerized numeric control).

In the example of Fig. 1, the controller 4 may receive the sensor values V provided by the sensors 2 and may store said received values sensors V in the storage 3.

The computerized device 10 of Fig. 1 includes a labeling unit 11, a determining unit 12 and a generating unit 13.

The labeling unit 11 is configured to provide a semantic label L to a certain sensor 2 of the plurality of sensors 2. The semantic label L is defined by user a user U, e.g. an operator of the industrial system 1, and specifies the certain sensor 2.

For example, the labeling unit 11 includes a keyboard for manually entering the semantic label L for the certain sensor 2. In other words, the user U may use the keyboard to manually enter "temperature sensor" for the present example of said sensor 2.

According to a further example, a set or list of predefined semantic labels is presented to the user, wherein the user may use certain cursor keys of the keyboard to select one of the semantic labels of the list. Furthermore, a certain function key of the keyboard may be used to call up the list.

Alternatively or additionally, the labeling unit 11 may include a touch display for selecting the semantic label L from a set of predefined semantic labels. In other words, the touch display may present said predefined semantic labels to the user U and the user U selects one of the presented predefined semantic labels using said touch display.

In a further example, the touch display includes a virtual keyboard for manually entering the semantic label for the certain sensor. Moreover, also the virtual keyboard may include a virtual function key for calling up said list.

Alternatively or additionally, the labeling unit 11 may include a microphone and a speech-to-text-engine connected to the microphone for providing a natural language-based dialogue with the user U regarding the certain sensor 2. Further, a chatbot is provided which is configured to extract the semantic label L from the natural language-based dialogue. In other words, the speech-to-text-engine has said natural language-based dialogue with the user U using said microphone. From that dialogue, the chatbot extracts the semantic label L. For the above-mentioned example, if the dialogue includes a sentence like "the present sensor is a temperature sensor" spoken by the user U, the chatbot extracts "temperature sensor" as the present semantic label L.

The determining unit 12 of Fig. 1 is configured to determine a unique identifier I for uniquely referencing those sensor values V stored in the storage 3 being provided by the certain sensor 2. Said determined unique identifier I is provided to the generating unit 13.

Moreover, the determining unit 12 may use additional information A provided by the controller 4 for providing the unique identifier I for the certain sensor 2.

The generating unit 13 is configured to generate a semantic element E for the certain sensor 2 for a semantic description D of the industrial system 1 by mapping the semantic label L and the determined unique identifier I. In other words, the generating unit 13 maps the semantic label L provided by the labeling unit 11 and the unique identifier I determined by the determining unit 12 to generate a corresponding semantic element E for the certain sensor 2, i.e. for the temperature sensor 2 in the present example.

For example, if the industrial system 1 has a plurality N of sensors 2, the labeling unit 11, the determining unit 12 and the generating unit 13 execute the above-mentioned scheme for each of the N sensors 2. In other words, for each of the N sensors 2, one semantic element E is generated and integrated to the semantic description D of the industrial system 1.

For storing the respective generated semantic element E as part of the semantic description D, the computerized device 10 includes a memory 14. The memory 14 may be integrated into the computerized device 10 as shown in Fig. 1. Alternatively, the memory 14 may be external to the computerized device 10 and may be connected to the computerized device 10 by a network, e.g. by an intranet or by the internet.

The memory 14 may be embodied by a data historian which includes a local database, an edge database and/or a cloud database.

In Fig. 2, a schematic diagram of a second embodiment of an industrial system 1 including a computerized device 10 for operating the industrial system 1 is depicted. The second embodiment of Fig. 2 includes all the features of the first embodiment of Fig. 1. Additionally, the computerized device 10 of the second embodiment of Fig. 2 includes a detection unit 15. The detection unit 15 is configured to detect a trigger event TE provided by the user U. That trigger event TE may be embodied by a certain keyword, e.g. by "computer".

The detection unit 15 is configured to trigger the labeling unit 11 for providing the semantic label L using the detected trigger event TE. For example, the detection unit 15 generates a trigger command TC upon detection of said trigger event TE. Then, the detection unit 15 triggers the labeling unit 11 by means of the generated trigger command TC.

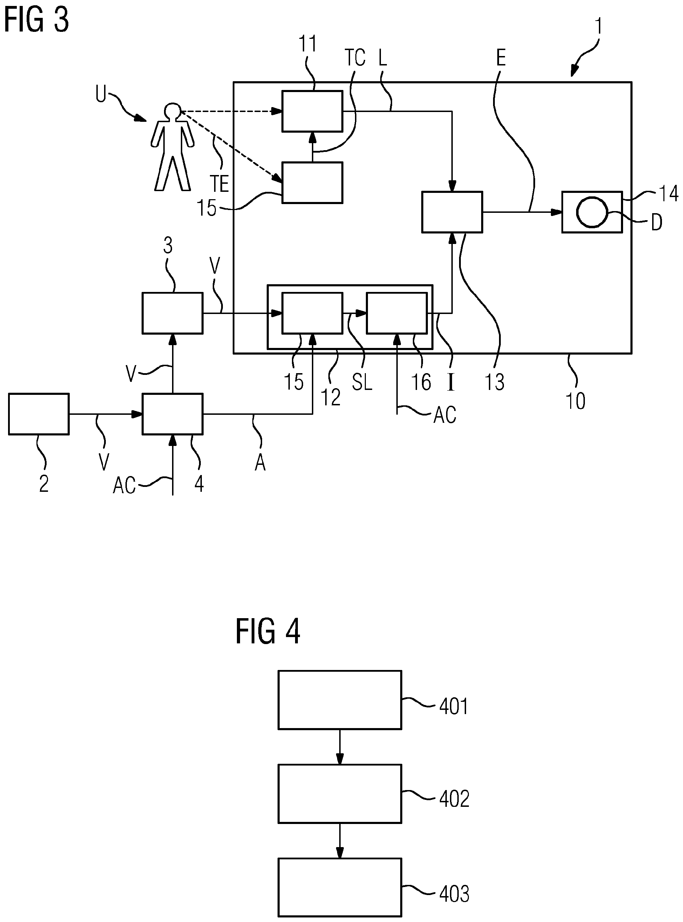

Fig. 3 shows a schematic diagram of a third embodiment of an industrial system 1 including a computerized device 10 for operating the industrial system 1.

The third embodiment of Fig. 3 is based on the second embodiment of Fig. 2 and includes all the features of the second embodiment of Fig. 2. Additionally, the determining unit 12 of Fig. 3 includes an outlier detection unit 15 and a code analyzer unit 16.

The outlier detection unit 15 is configured to detect atypical changes in the stored sensor values V of the sensors 2 and to output sensor candidates SC for the certain sensor 2 to the code analyzer unit 16 in dependence on the detected atypical changes.

Moreover, the code analyzer unit 16 is configured to provide the unique identifier I using the sensor candidates SC and using an automation code AC of the industrial system 1. In this regard, Fig. 3 shows that the current automation code AC is not only provided to the controller 4 of the industrial system 1, but also to the code analyzer unit 16 of Fig. 3.

Fig. 4. shows a method for operating an industrial system 1 including a plurality of sensors 2 for providing sensor values V and a storage 3 for storing the sensor values V provided by the sensors 2. Examples for the industrial system 1 are depicted in each of Fig. 1, 2 and 3.

The method of Fig. 4 includes the method steps 401, 402 and 403:
In method step 401, a semantic label L is provided to a certain sensor 2 of the plurality of sensors 2, the semantic label L being defined by a user U and specifying said certain sensor 2.

In method step 402, a unique identifier I is determined for uniquely referencing those sensor values V stored in the storage 3 being provided by the certain sensor 2.

In method step 403, a semantic element E is generated by mapping the semantic label L provided to the certain sensor 2 and the determined unique identifier I.

Although the present invention has been described in accordance with an exemplary embodiment, an exemplary use case and preferred variants thereof, it is obvious for the person skilled in the art that modifications are possible in all embodiments, use cases and variants.

### Reference Numerals:

- 1: industrial system
- 2: sensor
- 3: storage
- 4: controller
- 10: computerized device
- 11: labeling unit
- 12: determining unit
- 13: generating unit
- 14: memory
- 15: outlier detection unit
- 16: code analyzer unit
- 401-403: method steps

- A: additional information
- AC: automation code
- E: semantic element
- I: identifier
- L: semantic label
- SC: sensor candidate
- TC: trigger command
- TE: trigger event
- U: user
- V: sensor value

## Claims

1. A computerized device (10) for operating an industrial system (1) including a plurality of sensors (2) for providing sensor values (V) and a storage (3) for storing the sensor values (V) provided by the sensors (2), the computerized device (10) comprising:
a) a labeling unit (11) for providing a semantic label (L) to a certain sensor (2) of the plurality of sensors (2), said semantic label (L) being defined by a user (U) and specifying said certain sensor (2),
b) a determining unit (12) for determining a unique identifier (I) for uniquely referencing those sensor values (V) stored in the storage (3) being provided by the certain sensor (2), and
c) a generating unit (13) for generating a semantic element (E) for the certain sensor (2) for a semantic description (D) of the industrial system (1) by mapping the semantic label (L) and the determined unique identifier (I).

2. The computerized device of claim 1,
**characterized in**
**that** the industrial system (1) is an automation system.

3. The computerized device of claim 2,
**characterized by**
a memory (14) for storing the generated semantic element (E) as a part of the semantic description (D) for describing the automation system (1).

4. The computerized device of claim 3,
**characterized in**
**that** the memory (14) is embodied by a data historian which includes a local database, an edge database and/or a cloud database.

5. The computerized device of any of claims 1 to 4, **characterized by**
a detection unit (15) for detecting a trigger event (TE) provided by the user (U), wherein the detection unit (15) is configured to trigger the labeling unit (11) for providing the semantic label (L) to the certain sensor (2) using the detected trigger event (TE).

6. The computerized device of claim 5,
**characterized in**
**that** the labeling unit (11) is configured to, after being triggered by the detection unit (15), trigger the determining unit (12) for determining the unique identifier (I) for the certain sensor (2).

7. The computerized device of any of claims 2 to 6, **characterized in**
**that** each of the sensors (2) is configured to provide a time series of measured sensor values (V), wherein the storage (3) is configured to store the time series provided by the sensors (2).

8. The computerized device of claim 7,
**characterized in**
**that** the determining unit (12) includes an outlier detection unit (15) and a code analyzer unit (16),
wherein the outlier detection unit (15) is configured to detect atypical changes in the stored time series (V) of the sensors (2) and output sensor candidates (SC) for the certain sensor (2) to the code analyzer unit (16) in dependence on detected atypical changes, and
wherein the code analyzer unit (16) is configured to provide the unique identifier (I) using the sensor candidates (SC) and using an automation code (AC) of the automation system (1).

9. The computerized device of claim 8,
**characterized in**
**that** the outlier detection unit (15) is configured to utilize at least one of the following outlier detection algorithms including class support vector machines, probabilistic models, like Bayesian networks, and neural auto encoders, like deep neural auto encoders.

10. The computerized device of claim 8 or 9,
**characterized in**
**that**, if multiple sensor candidates (SC) for the certain sensor (2) are output by the outlier detection unit (15), the code analyzer unit (16) is configured to disambiguate cause and effect for providing the unique identifier (I) for the certain sensor (2).

11. The computerized device of any of claims 1 to 10, **characterized in**
**that** the labeling unit (11) includes at least one of the following:
- a keyboard for manually entering the semantic label (L) for the certain sensor (2) and/or for selecting the semantic label (L) from a set of predefined semantic labels,
- a touch display for selecting the semantic label (L) from a set of predefined semantic labels and/or for manually entering the semantic label (L) for the certain sensor (2),
and
- a microphone and a speech-to-text engine connected to the microphone for providing a natural language-based dialogue with the user (U) regarding the certain sensor (2), and a chatbot for extracting the semantic label (L) from the natural language-based dialogue for the certain sensor (2).

12. The computerized device of any of claims 1 to 11, **characterized by**
a localization device for determining a localization information indicating a localization of the certain sensor (2) in the industrial system (1), wherein the generating unit (13) is further configured to add the determined localization information to the semantic element (E) for the certain sensor (2).

13. An industrial system (1) comprising a plurality of sensors (2) for providing sensor values (V), a storage (3) for storing the sensor values (V) provided by the sensors (2), and a computerized device (10) for operating the industrial system (1) according to any of claims 1 to 12.

14. A method for operating an industrial system (1) including a plurality of sensors (2) for providing sensor values (V) and a storage (3) for storing the sensor values (V) provided by the sensors (2), the method comprising:
a) providing (401) a semantic label (L) to a certain sensor (2) of the plurality of sensors (2), said semantic label (L) being defined by a user (U) and specifying said certain sensor (2),
b) determining (402) a unique identifier (I) for uniquely referencing those sensor values (V) stored in the storage (3) being provided by the certain sensor (2), and
c) generating (403) a semantic element (E) for a semantic description (D) of the industrial system (1) by mapping the semantic label (L) provided to the certain sensor (2) and the determined unique identifier (I).

15. A computer program product comprising a program code for executing the method of claim 14 when run on at least one computer.
